**Europäisches Patentamt**

**European Patent Office**

**Office européen des brevets**

(19)

(11) Veröffentlichungsnummer : **0 218 899 B2**

(12) # NEUE EUROPÄISCHE PATENTSCHRIFT

(45) Veröffentlichungstag der neuen Patentschrift :
**13.05.92 Patentblatt 92/20**

(51) Int. Cl.⁵ : **B23D 17/06, E02F 3/22**

(21) Anmeldenummer : **86112291.9**

(22) Anmeldetag : **05.09.86**

(54) **Abbruchschere.**

(30) Priorität : **14.09.85 DE 8526390 U**

(43) Veröffentlichungstag der Anmeldung :
**22.04.87 Patentblatt 87/17**

(45) Bekanntmachung des Hinweises auf die
Patenterteilung :
**12.07.89 Patentblatt 89/28**

(45) Bekanntmachung des Hinweises auf die
Entscheidung über den Einspruch :
**13.05.92 Patentblatt 92/20**

(84) Benannte Vertragsstaaten :
**AT BE CH DE FR GB IT LI NL SE**

(56) Entgegenhaltungen :
**DE-A- 1 576 125**
**DE-A- 3 146 696**

(56) Entgegenhaltungen :
**DE-A- 3 444 130**
**FR-A- 2 278 970**
**GB-A- 1 546 090**
**GB-A- 2 122 125**
**US-A- 3 204 506**
**Lueger, Lexikon der Technik 4. Aufl. Bd. 6, P.
617, Stichwort "Kolbenkühlung"**

(73) Patentinhaber : **Wack, Helmut**
**Am Langen Zaun Nr. 7**
**W-6653 Blieskastel-Breitfurt (DE)**

(72) Erfinder : **Wack, Helmut**
**Am Langen Zaun Nr. 7**
**W-6653 Blieskastel-Breitfurt (DE)**

(74) Vertreter : **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41 (DE)**

EP 0 218 899 B2

## Beschreibung

Die Erfindung betrifft eine Abbruchschere als Anbaugerät für den Löffelarm von Baggern, bestehend aus einem zugleich ein Gehäuse der Schere bildenden ersten Scherenarm, einem am Gehäuse angelenkten zweiten Scherenarm und einem zwischen Seitenwangen des Gehäuses angeordneten Linearantrieb mit Kolbenstange und Zylinder als Antrieb für den zweiten Scherenarm, wobei der Linearantrieb an seinem am Gehäuse festgelegten Ende an eine Druckmittel leitung des Baggers anschließbar ist.

Abbruch- bzw. Schrottscheren werden hauptsächlich bei Abbrucharbeiten von Bauwerken, z. B. von Stahl konstruktionen, Stahlskelettkonstruktionen etc. oder von verfahrenstechnischen industriellen Anlagen sowie beim Aufarbeiten von Schrott verwendet. Abbruchscheren dienen weiterhin zum transportgerechten Zerkleinern von Metallteilen bei diesen Abbrucharbeiten oder auch auf Schrottplätzen. Diese Scheren sind als Anbaugerät für den Löffelarm von Baggern ausgebildet und werden von dessen Führerhaus aus betätigt.

Es ist eine Abbruchschere (DE-U-8 516 380) bekannt, die als Anbaugerät für Bagger o. dgl. bei Abbrucharbeiten eingesetzt wird. Diese Abbruchschere weist einen ersten Scherenarm auf, der gleichzeitig das Gehäuse der Schere bildet, mittels dessen die Schere am Löffelarm befestigt wird. Ein weiterer Scherenarm ist an diesem Gehäuse angelenkt und wird über einen hydraulischen Linearantrieb bewegt. Dieser Linearantrieb, der als Differentialzylinder ausgebildet ist, ist zwischen Seitenwangen des Gehäuses angeordnet, wobei sich der Zylinder am Gehäuse abstützt und die Kolbenstange am einen Ende des beweglich gelagerten Scherenarms angreift. In der Öffnungsstellung der Abbruchschere befinden sich Zylinder und Kolbenstange in eingeschobenem Zustand zwischen den Seitenwangen des Gehäuses. In der Schließstellung der Schere befindet sich jedoch die ausgefahrene Kolbenstange außerhalb der Seitenwangen des Gehäuses. Bei Abbrucharbeiten kommt es nicht selten vor, daß Teile der abzubrechenden Konstruktion in sich zusammenbrechen oder daß Bauteile herabstürzen und die Schere, vor allem aber den Linearantrieb bzw. dessen freiliegende Kolbenstange treffen und beschädigen. Auch durch unsachgemäße Bedienung der Schere bzw. des Löffelarms kann es zu Schäden an der Kolbenstange kommen. Arbeitsausfälle sowie zeitaufwendige und kostspielige Reparaturarbeiten sind die Folge.

Der Erfindung liegt deshalb die Aufgabe zugrunde, Beschädigungen des Linearantriebs für den schwenkbaren Scherenarm bei der eingangs genannten Abbruchschere zu verhindern.

Diese Aufgabe wird erfindungsgemäß dadurch gelöst, daß die Kolbenstange des Linearantriebs am Gehäuse und der Zylinder am schwenkbaren Scherenarm festgelegt ist, und daß die Kolbenstange Bohrungen zum Anschluß an die Druckmittel leitungen aufweist.

In der Öffnungsstellung der Schere befindet sich weiterhin der Zylinder und die Kolbenstange des Linearantriebs zwischen den sie gegen Beschädigungen schützenden Seiten wangen des Gehäuses. Erfindungsgemäß ist jedoch die Kolbenstange mit dem Gehäuse verbunden, wohingegen der Zylinder am schwenkbaren Scherenarm angreift. Bei der Schließbewegung der Schere tritt nunmehr nicht die Kolbenstange, sondern der Zylinder aus dem Schutzbereich der Seitenwangen des Gehäuses aus, und die Kolbenstange verbleibt in ihrer geschützten Lage. Der Zylinder ist nun aber gegen Beschädigungen weit unempfindlicher; er kann auch leichter durch eine zusätzliche Panzerung o. dgl. geschützt werden.

Erfindungsgemäß weist die Kolbenstange des Linearantriebs Bohrungen zum Anschluß an die Druckmittelleitungen auf. Die Versorgung des Linearantriebs erfolgt also durch die Kolbenstange hindurch, so daß der sich nunmehr bewegende Zylinder nicht durch an ihn angeschlossene Druckmittelleitungen behindert wird. Der Anschluß der Druckmittelleitungen an die Kolbenstange hat zudem den Vorteil, daß die Leitungen ebenfalls innerhalb des Gehäuses verlegt werden können und somit gleichfalls vor von außen wirkenden Kräften geschützt sind.

Eine vorteilhafte Ausführungsform sieht vor, daß die Kolbenstange mit zwei parallelen, in Längsrichtung verlaufenden Bohrungen versehen ist. Die Bohrungen, die über einen Anschluß mit den Druckmittelleitungen verbunden sind, versorgen die Arbeitsräume des Linearantriebs mit Druckmittel und dienen sowohl als Zuführals auch als Abführleitungen.

Gemäß einer vorteilhaften Ausführungsform weist die Kolbenstange zwei im wesentlichen konzentrische Axialbohrungen auf. Axialbohrungen haben den wesentlichen Vorteil, daß sie das Biege-Widerstandsmoment der Kolbenstange nur geringfügig verringern, so daß Linearantriebe mit herkömmlichen Abmessungen verwendet werden können. Vorteilhaft sind die beiden Axialbohrungen durch ein in die Kolbenstange axial eingesetztes Rohr getrennt. Dieses Rohr, das die Axialbohrungen in zwei getrennte konzentrische Kanäle unterteilt, ermöglicht die Verwendung eines Differentialzylinders als Linearantrieb.

Differentialzylinder weisen einen kolbenstangenfreien und einen kolbenstangenseitigen Arbeitsraum auf, die je mit einer Druckmittelleitung verbunden sind. Bei der Kolbenstange der erfindungsgemäßen Abbruchschere reicht eine der axialen Bohrungen bis in den kolbenstangenfreien Arbeitsraum des Zylinders, und mündet die andere axiale Bohrung über einen radialen Kanal in den kolbenstangenseitigen Arbeitsraum des

2

Zylinders. Der Linearantrieb kann nunmehr aufgrund der speziellen Ausbildung der Axialbohrungen als Differentialzylinder betrieben werden, da die beiden Arbeitsräume über voneinander getrennte Bohrungen mit den Druckmittelleitungen verbunden sind.

Das eine Ende der Kolbenstange weist zu dessen Festlegung am Gehäuse der Abbruchschere einen Querbolzen auf, der z. B. über eine Verschraubung mit der Kolbenstange verbunden ist. An dem den Querbolzen überragenden Ende der Kolbenstange können nunmehr die Druckmittelleitungen angeschlossen werden. Eine andere vorteilhafte Ausführungsform sieht vor, daß das äußere Ende der Kolbenstange mit einem Anschlüsse für die Druckmittelleitungen aufweisenden Kupplungsstück versehen ist. Die Festlegung der Kolbenstange am Gehäuse erfolgt nun über ein Kupplungsstück, das ein Querloch aufweist, durch welches der Querbolzen greift. Das Kupplungsstück ist mit dem Ende der Kolbenstange, z. B. durch Schweißen, verbunden. Zudem weist das Kupplungsstück Zuführleitungen für die Bohrungen der Kolbenstange auf, die im wesentlichen radial von der Außenoberfläche nach innen zu den Bohrungen verlaufen und somit eine Verbindung zu den Druckmittelleitungen herstellen.

Weitere Einzelheiten und Vorteile der Erfindung ergeben sich aus der nachfolgenden Beschreibung, in der ein Ausführungsbeispiel der Erfindung unter Bezugnahme auf die Zeichnung im einzelnen erläutert ist. Es zeigen:

Fig. 1 eine Seitenansicht der Abbruchschere mit freigelegtem Linearantrieb,

Fig. 2 eine Seitenansicht des Linearantriebs in teilweise geschnittener Darstellung,

Fig. 3 eine Draufsicht auf das Kupplungsstück des Linearantriebs.

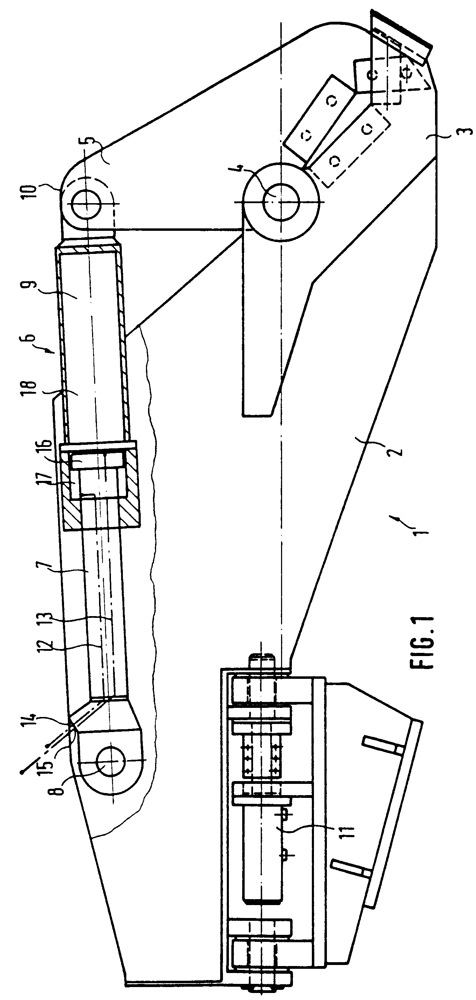

Fig. 1 zeigt eine Abbruchschere 1 mit einem das Gehäuse 2 bildenden ersten Scherenarm 3 und einem im Lager 4 am Gehäuse 2 angelenkten zweiten Scherenarm 5. Als Antrieb des Scherenarms 5 dient ein Linearantrieb 6. Weiterhin weist die Abbruchschere 1 eine Schwenkeinrichtung 11 auf, über die sie um ihre Längsachse schwenkbar ist. Die Kolbenstange 7 des Linearantriebs 6 stützt sich über einen Querbolzen 8 am Gehäuse 2 ab, wohingegen dessen Zylinder 9 am Ende 10 des schwenkbaren Scherenarms 5 angreift. Wie aus Fig. 1 ersichtlich, befindet sich die Kolbenstange 7 des Linearantriebs 6 sowohl in ausgefahrenem als auch in eingefahrenem Zustand (nicht dargestellt) stets zwischen den Seitenwangen des Gehäuses 2.

Zur Versorgung des Linearantriebs 6 mit Druckmittel ist die Kolbenstange 7 mit Bohrungen 12, 13 versehen, die Anschlüsse 14, 15 für die Druckmittelleitungen aufweisen und im Bereich des Kolbens 16 in die Arbeitsräume 17, 18 des Zylinders 9 münden.

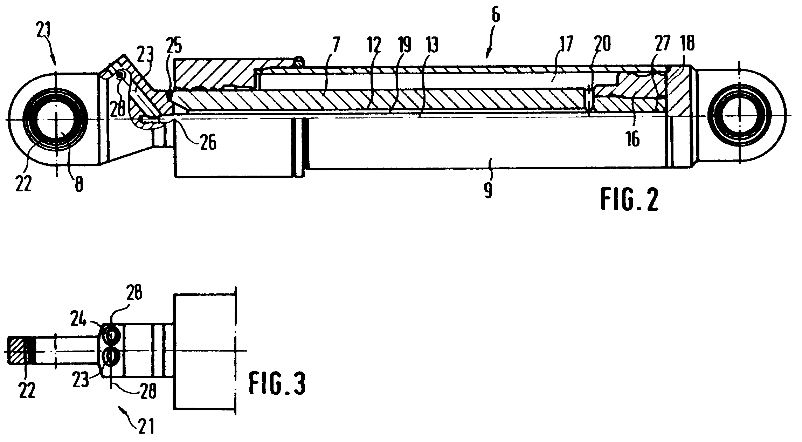

Wie aus Fig. 1 ersichtlich ist, sind die Bohrungen 12, 13 als im wesentlichen parallele Längsbohrungen ausgeführt. Fig. 2 zeigt den Linearantrieb 6 in eingeschobenem Zustand, wobei die Bohrungen 12, 13 als konzentrische Bohrungen ausgeführt sind. Bei gezeigten Ausführungsbeispiel werden die beiden konzentrischen Bohrungen 12, 13 durch eine einzige Bohrung großen Durchmessers und ein darin eingesetztes Rohr 19 gebildet, so daß zwei voneinander getrennte Leitungen für die Arbeitsräume 17, 18 des Linearantriebs gebildet werden. Die Bohrung 12 weist an ihrem einen Ende einen radial verlaufenden Kanal 20 auf, der die Verbindung zwischen Bohrung 12 und Arbeitsraum 17 herstellt. Die Bohrung 13 mündet zentral in den Arbeitsraum 18. Das äußere Ende der Kolbenstange 7 ist mit einem Kupplungsstück 21 verbunden, das sowohl zur Festlegung der Kolbenstange 7 am Gehäuse 2 dient, als auch die Bohrungen 12, 13 mit den Druckmittelleitungen verbindet. Die Festlegung des Linearantriebs 6 am Gehäuse 2 erfolgt über einen Querbolzen 8, der durch ein als Lager dienendes Querloch 22 des Kupplungsstücks 21 greift. Die Bohrungen 12, 13 münden je in einer Zuführleitung 23, 24 (Fig. 3), die an ihrem äußeren Ende Anschlüsse für die Druckmittelleitungen aufweisen und mit Entlüftungsschrauben 28 versehen sind.

Die Verbindung zwischen Kupplungsstück 21 und Kolbenstange 7 ist als Schweißverbindung 25 ausgeführt, so daß sowohl eine sichere Festlegung der Kolbenstange 7 am Kupplungsstück 21 als auch eine Abdichtung der Bohrung 12 gegenüber der Umgebung gewährleistet ist. Die Abdichtung der Bohrung 13 erfolgt einerseits durch Verschweißen des einen Rohrendes 26 mit dem Kupplungsstück 21 und andererseits durch Abdichtung über einen O-Ring 27 o. dergl. am anderen Ende 27 des Rohres 19.

## Patentansprüche

1. Abbruchschere (1) als Anbaugerät für den Löffelarm von Baggern, bestehend aus einem zugleich ein Gehäuse (2) der Schere bildenden ersten Scherenarm (3), einem am Gehäuse angelenkten zweiten Scherenarm (5) und einem zwischen Seitenwangen des Gehäuses angeordneten Linearantrieb mit Kolbenstange (7) und Zylinder (9) als Antrieb für den zweiten Scherenarm, wobei der Linearantrieb (6) an seinem am Gehäuse (2) festgelegten Ende an Druckmittelleitungen des Baggers anschließbar ist, **dadurch gekennzeichnet,** daß die Kolbenstange (7) des Linearantriebs (6) am Gehäuse (2) und der Zylinder (9) am schwenkbaren Scherenarm (5) festgelegt ist und nur er sich in der Schließstellung der Schere (1) außerhalb der Seitenwangen befindet und daß die Kolbenstange (7) zwei im wesentlichen konzentrische Axialbohrungen (12, 13) zum Anschluß an die Druckmittelleitungen aufweist.

2. Abbruchschere nach Anspruch 1, dadurch gekennzeichnet, daß die beiden Axialbohrungen (12, 13) durch ein in die Kolbenstange (7) axial eingesetztes Rohr (19) getrennt sind.

3. Abbruchschere nach Anspruch 1 oder 2, dadurch gekennzeichnet, daß eine der Axialbohrungen (13) bis in den kolbenstangenfreien Arbeitsraum (18) des Zylinders (8) reicht und die andere axiale Bohrung (12) über einen radialen Kanal (20) in den kolbenstangenseitigen Arbeitsraum (17) des Zylinders (8) mündet.

4. Abbruchschere nach einem der Ansprüche 1 bis 3, dadurch gekennzeichnet, daß das äußere Ende der Kolbenstange (7) mit einem Anschlüsse für die Druckmittelleitungen aufweisenden Kupplungsstück (21) versehen ist.

## Claims

1. Demolition shears (1) as an attachment for the shovel arm of excavators, comprising a first shear arm (3) simultaneously forming a casing (2) for the shears, a second shear arm (5) articulated to the casing and a linear drive, located between the side-parts of the casing, with a piston rod (7) and a cylinder (9) as a drive for the second shear arm, the linear drive (6) being connectable at its end fixed to the casing (2) to pressure medium lines of the excavator, characterized in that the piston rod (7) of the linear drive (6) is fixed to the casing (2) and the cylinder (9) is fixed to the pivotable shear arm (5), only said cylinder being located outside the side-parts in the closed position, and that the piston rod (7) has two substantially concentric axial bores (12, 13) for connection to the pressure medium lines.

2. Demolition shears according to claim 1 characterized in that the two axial bores (12, 13) are separated by a pipe (19) inserted axially in the piston rod (7).

3. Demolition shears according to claim 1 or 4, characterized in that one of the axial bores (13) extends into the piston rod-free working area (18) of the cylinder (8) and the other axial bore (12) issues via a radial channel (20) into the piston rod-side working area (17) of the cylinder (8).

4. Demolition shears according to one of the claims 1 to 3, characterized in that the outer end of the piston rod (7) is provided with a coupling piece (21) having connections for the pressure medium lines.

## Revendications

1. Ciseaux de démolition (1) en tant qu'équipement auxiliaire pour le bras de pelles mécaniques, composés d'une première branche de ciseaux (3) constituant en même temps un carter (2) de ciseaux, d'une seconde branche de ciseaux (5) articulée sur le carter et d'un entraînement linéaire disposé entre les faces latérales du carter, avec tige de piston (7) et cylindre (9), en tant qu'entraînement pour la seconde branche de ciseaux, l'entraînement linéaire (6) pouvant être raccordé, à son extrémité fixée sur le carter (2), à des conduites de fluide sous pression de la pelle mécanique, caractérisés en ce que la tige de piston (7) du système d'entraînement linéaire (6) est fixée sur le carter (2), tandis que le cylindre (9) est monté sur la branche de ciseaux (5) pivotante et seulement lui est situé entre les faces latérales dans la position fermée, et que la tige de piston (7) comporte deux alésages axiaux (12,13) sensiblement concentriques pour le raccordement aux conduites de fluide sous pression.

2. Ciseaux selon la revendication 1, caractérisés en ce que les deux alésages axiaux (12, 13) sont séparés par un tube (19) inséré axialement dans la tige de piston (7).

3. Ciseaux de démolition selon la revendication 1 ou 2, caractérisés en ce que l'un des alésages axiaux (13) s'étend jusque dans le volume de travail (18) du cylindre (8) dépourvu de tige de piston et que l'autre alésage axial (12) débouche dans le volume de travail (17) du cylindre (8) à côté de tige de piston par l'intermédiaire d'un canal radial (20).

4. Ciseaux de démolition selon l'une des revendications 1 à 3, caractérisés en ce que l'extrémité extérieure de la tige de piston (7) est munie d'un élément d'accouplement (21) avec des raccords pour les conduites de fluide sous pression.

FIG.1

EP 0 218 899 B2

FIG. 2

FIG. 3